# EUROPÄISCHE PATENTANMELDUNG

(11) **EP 1 306 196 A1**
(43) Veröffentlichungstag der Anmeldung: **02.05.2003**
(21) Anmeldenummer: 01811039.5
(22) Anmeldetag: 24.10.2001
(51) Int. Cl.: B29C 65/16, B29C 65/14

(54) **Haltevorrichtung, Vorrichtung zum Verschweissen von Werkstücken und Verfahren zum Bereitstellen einer Haltevorrichtung**

(71) Anmelder: Telsonic AG, 9552 Bronschhofen (CH)
(72) Erfinder: Kising, Jürgen, 9008 St Gallen (CH); Solenthaler, Jürg, 9552 Bronschhofen (CH)
(74) Vertreter: Müller, Christoph Emanuel

(57) **Zusammenfassung**

Eine Haltevorrichtung dient zum Gegeneinanderdrücken von zwei Werkstücken (2, 3). Die Werkstücke sollen zum Verschweissen mit Laserlicht (L) gegeneinander gepresst werden. Ein erstes Werkstück (2) ist für Laserlicht (L) im Wesentlichen transparent. Die Haltevorrichtung ist ebenfalls für Laserlicht im Wesentlichen transparent und weist eine Andruckfläche (4) auf, deren Form an die Oberflächenform des ersten Werkstücks (2) angepasst ist.

## Beschreibung

Die Erfindung betrifft eine Haltevorrichtung, eine Vorrichtung zum Verschweissen von Werkstücken und ein Verfahren zum Bereitstellen einer solchen Haltevorrichtung mit den Merkmalen des Oberbegriffs der unabhängigen Patentansprüche.

Es ist bekannt, Werkstücke, insbesondere aus Kunststoff durch Verwendung von Laserlicht miteinander zu verschweissen. Dabei kann beispielsweise das erste Werkstück aus einem für das Laserlicht transparenten Material und das zweite Werkstück aus einem das Laserlicht absorbierenden Material bestehen. Der Laserstrahl kann durch das transparente erste Werkstück durchgeleitet werden und trifft auf das zweite Werkstück auf. Auf Grund der Absorption des Laserlichtes am zweiten Werkstück ergibt sich eine lokale Erwärmung, so dass das Material angeschmolzen und die beiden Teile miteinander verbunden werden. Damit eine sichere Verbindung gewährleistet ist, müssen die beiden Werkstücke aneinandergedrückt werden. Dazu sind sogenannte Niederhalter oder Haltevorrichtungen bekannt, welche die beiden Werkstücke gegeneinander pressen und eine gleichmässige Druckverteilung auf der Schweissnaht gewährleistet. Versuche haben gezeigt, dass eine ungleichmässige Druckverteilung auf die Schweissnaht dazu führt, dass an einzelnen Stellen keine oder nur eine ungenügende Schweissverbindung erzeugt wird.

Typische Werkstücke, welche miteinander verschweisst werden, sind beispielsweise Leuchten, die im Automobilbau eingesetzt werden. Diese Werkstücke haben oft eine unregelmässige, nicht plane Oberfläche. Dadurch ergeben sich Probleme beim Aneinanderdrücken der Werkstücke, da keine genau definierte, plane Anpressfläche vorhanden ist.

Aus EP 1 060 837 A2 ist beispielsweise eine Schweisshalterung für Werkstücke bekannt. Die Halterung weist einen Spannkopf mit druckelastisch nachgiebigen Spannflächen auf, welche einen Durchlass für den Laserstrahl begrenzen. Mit dieser Vorrichtung soll es möglich sein, auch unebene Fügeflächen vollflächig gegeneinander zu drücken. Ein Nachteil bei dieser Vorrichtung besteht in der verhältnismässig komplizierten Herstellung der druckelastisch nachgiebigen Spannflächen. Vor allem zum Erzeugen von in sich geschlossenen Schweissnähten, beispielsweise entlang des Umfangs von Scheinwerfergläsern, ist diese Vorrichtung schlecht einsetzbar. Ein Durchlass für den Laserstrahl für eine solche Schweissnaht kann nicht als Punkt ausgebildet sein und würde daher den Spannkopf zwingend in einzelne Teile aufteilen, die nicht miteinander verbunden oder verbindbar sind.

Die Aufgabe der vorliegenden Erfindung besteht darin, die Nachteile des Bekannten zu vermeiden, insbesondere also eine Haltevorrichtung zu schaffen, welche einfach herstellbar ist und welche ein zuverlässiges Aneinanderpressen von Werkstücken auch mit unebenen Oberflächen erlaubt. Eine weitere Aufgabe der Erfindung besteht darin, ein Verfahren zum Herstellen einer solchen Haltevorrichtung zu schaffen.

Diese und andere Aufgaben werden erfindungsgemäss mit einer Haltevorrichtung, mit einer Schweissvorrichtung und mit einem Verfahren zum Bereitstellen einer Haltevorrichtung mit den Merkmalen des kennzeichnenden Teils der unabhängigen Patentansprüche gelöst.

Die Haltevorrichtung dient zum Andrücken eines ersten Werkstücks an ein zweites Werkstück. Das erste Werkstück soll durch Anwendung von Laserlicht mit dem zweiten Werkstück verschweisst werden. Das erste Werkstück besteht wenigstens teilweise aus einem für das Laserlicht im Wesentlichen transparenten Material. Es ist nicht erforderlich, dass das ganze erste Werkstück für das Laserlicht transparent ist. Transparenz ist nur im Bereich der geplanten Schweissstelle erforderlich. Es ist auch nicht notwendig, dass das Werkstück für das Laserlicht vollständig transparent ist, das heisst, dass gar keine Absorption des Laserlichts im Werkstück entsteht. Je nach Anwendungszweck ist eine Absorption bis zu einem gewissen Grad zulässig. Im Wesentlichen Transparent bedeutet hier und im Folgenden, dass das Material ausreichend viel Laserlicht passieren lässt, damit ein Schweissvorgang noch möglich ist. Das erste Werkstück weist eine nicht planare Oberflächenform auf. Erfindungsgemäss ist die Haltevorrichtung mit einem Anpresselement versehen, das ebenfalls wenigstens teilweise für das Laserlicht im Wesentlichen transparent ist. Auch hier gilt, dass Transparenz nur im Bereich der gewünschten Schweissstelle gefordert ist. Unter im Wesentlichen Transparent wird auch hier verstanden, dass das Anpresselemlent für das Laserlicht eine so geringe Absorption haben soll, dass der bestimmungsgemässe Einsatz zum Verschweissen der Werkstücke möglich ist. Das Anpresselement weist ausserdem eine Andruckfläche auf, deren Form an die Oberflächenform des ersten Werkstücks angepasst oder anpassbar ist. Im Gegensatz zum Stand der Technik ist es bei der vorliegenden Erfindung nicht notwendig, im Anpresselement einen Durchlass für das Laserlicht vorzusehen, da das Anpresselement selbst wenigstens teilweise aus transparentem Material besteht.

Im Rahmen der vorliegenden Erfindung sind verschiedene alternative Ausführungsbeispiele denkbar. Gemäss einem ersten Ausführungsbeispiel ist das Anpresselement einstückig als Anpressblock ausgebildet. Der Anpressblock besteht aus einem für das Laserlicht transparentem Material. Es ist beispielsweise denkbar, die Andruckfläche in eine Seitenfläche des Anpressblockes einzufräsen. Der Anpressblock kann dabei beispielsweise aus Acryl bestehen.

Im Rahmen der Erfindung ist es auch denkbar, die Haltevorrichtung bei anderen Verbindungsvorgängen einzusetzen, bei welchen die Verbindung durch Licht ausgelöst wird. Zum Beispiel könnte die Vorrichtung zum Aneinanderdrücken von Werkstücken verwendet werden, welche mit einem z.B. unter UV-Licht aushärtenden Kleber miteinander verbunden werden sollen.

Es ist aber auch denkbar, den Anpressblock durch Giessen herzustellen. Der Anpressblock kann beispielsweise aus einem PU-Giessharz bestehen.

Gemäss einem zweiten Ausführungsbeispiel weist das Anpresselement eine Folie auf, deren Form der Oberflächenform des ersten Werkstücks angepasst ist. Die Formgebung kann beispielsweise durch Warmverformung erfolgen. Die Folie kann beispielsweise eine Acrylglasfolie sein. Die Dicke der Folie soll so gewählt werden, dass sich bei normalem Betrieb die Folie nicht mehr verformen lässt, so dass eine flächige, gute Anpresswirkung erzielbar ist.

Gemäss noch einem weiteren Ausführungsbeispiel der Erfindung besteht die Andruckfläche aus einem flexiblen Material, welches an die Oberflächenform des ersten Werkstücks anpassbar ist und welches gegen die Oberfläche des ersten Werkstücks anpressbar ist. Bevorzugt kann das Anpresselement fluiddicht und mit einem für das Laserlicht transparenten Fluid gefüllt sein. Die Andruckfläche aus dem flexiblen Material bildet dabei eine Wand des mit dem Fluid gefüllten Raumes. Gemäss diesem Ausführungsbeispiel ist das Andrückelement in der Art eines mit Luft oder mit einer viskosen Flüssigkeit gefüllten Kissens ausgebildet. Besonders einfach ist die Verwendung von Druckluft. Es ist aber auch denkbar, gelartige Flüssigkeiten zu verwenden.

Die vorstehend beschriebenen Ausführungsbeispiele haben alle bestimmte Vorteile. Einstückige Anpressblöcke lassen sich besonders einfach herstellen. Ausserdem kann sichergestellt werden, dass sich deren Form im Laufe der Zeit nicht verändert. Vorteilhaft ist dabei der als Gussteil hergestellte Anpressblock. Das erste Werkstück kann als formgebendes Werkzeug zum Herstellen der Gussform verwendet werden oder auch Teil der Gussform sein. Damit ist sichergestellt, dass die Andruckfläche eine Form aufweist, die genau der Oberflächenform des ersten Werkstückes entspricht.

Der Vorteil eines Anpresselements mit einer verformten Folie liegt darin, dass die Herstellung einfacher ist. Durch Ausgiessen der Rückseite der Folie kann eine Festigkeit erzielt werden, die vergleichbar mit der Festigkeit eines Blocks ist. Wenn als Umformwerkzeug zum Verformen der Folie das erste Werkstück verwendet wird, ist ebenfalls sichergestellt, dass die Form der Folie genau der Oberfläche des ersten Werkstücks entspricht.

Ein besonderer Vorteil bei der Ausbildung der Andruckfläche aus einem flexiblen Material besteht darin, dass die Haltevorrichtung für eine Mehrzahl von Werkzeugen mit verschiedenen Oberflächen verwendet werden kann, ohne dass Änderungen vorgenommen werden müssen. Die Andruckfläche erhält durch Kontakt mit dem zu verschweissenden ersten Werkstück automatisch dessen Form.

Gemäss einem alternativen Ausführungsbeispiel weist die Haltevorrichtung einen luftdicht abschliessbaren Raum auf. Die miteinander zu verbindenden ersten und zweiten Werkstücke sind in diesen Raum einsetzbar. Der Raum ist mit der Andruckfläche luftdicht verschliessbar und evakuierbar. Die dem ersten Werkstück abgewandte Seite der aus einem flexiblen Material bestehenden Andruckfläche ist mit Umgebungsdruck beaufschlagt. Wenn in dem geschlossenen Raum ein Unterdruck erzeugt wird, presst sich die Andruckfläche aus flexiblem Material automatisch an das erste Werkstück an und übernimmt dessen Form.

Die erfindungsgemässe Vorrichtung zum Verschweissen von zwei Werkstücken weist eine Quelle für Laserlicht und ein Gegenlager, auf welches das zweite Werkstück aufgelegt werden kann, auf. Erfindungsgemäss ist die Schweissvorrichtung mit einer wie vorstehend beschriebenen Haltevorrichtung zum Andrücken des ersten Werkstücks an das zweite Werkstück und an das Gegenlager versehen. Die Haltevorrichtung drückt dabei das erste Werkstück gegen das zweite Werkstück, wodurch das zweite Werkstück gegen das Gegenlager gepresst wird.

Wie ausgeführt, ist eine gleichmässisge Druckbelastung entlang der Schweissnaht wesentlich, damit zufriedenstellende Schweissergebnisse erzielt werden können. Gemäss einem weiteren bevorzugten Ausführungsbeispiel der Erfindung ist daher die Haltevorrichtung zum Andrücken des ersten Werkstücks und/oder das Gegenlager für das zweite Werkstück bewegbar angeordnet. Dabei ist insbesondere eine Bewegung aus einer Ebene senkrecht zur Pressrichtung sinnvoll. Gemäss einem ersten Ausführungsbeispiel kann die Haltevorrichtung bewegbar, insbesondere federnd befestigt sein.

Gemäss einem alternativen Ausführungsbeispiel ist es auch denkbar, das Gegenlager (auch Amboss genannt) beweglich, beispielsweise federnd zu befestigen. Ungleichmässigkeiten an der Rückseite des zweiten Werkstücks können dadurch ausgeglichen werden.

Gemäss einem weiteren Ausführungsbeispiel wird die Druckfläche des Gegenlagers in einzelne Zonen aufgeteilt, welche einzeln betätigbar oder bewegbar sind. Diese Anordnung ermöglicht eine noch bessere Anpassung an Unregelmässigkeiten an der Werkstükkunterseite. Die Druckfläche des Gegenlagers kann also in einzelne Druckstempel aufgeteilt sein, welche entweder federnd gelagert sind oder auch separat pneumatisch betätigbar sein können.

Gemäss einem weiteren bevorzugten Ausführungsbeispiel ist das Anpresselement der Haltevorrichtung an einem Haltekopf befestigt. Der Haltekopf ist derart ausgebildet, dass die Sicht des Benutzers der Haltevorrichtung auf das Werkstück nicht beeinträchtigt wird. Der Haltekopf kann beispielsweise ebenfalls aus für das Laserlicht und auch für sichtbares Licht transparentem Material gefertigt sein. Es ist auch denkbar, den Haltekopf teilweise mit Unterbrechungen zu versehen, beispielsweise den Haltekopf aus Tragstäben auszubilden. Indem sichergestellt wird, dass der Benutzer auch bei angepresstem Werkstück das Werkstück betrachten kann, kann der Benutzer den Verlauf des Laserstrahls nötigenfalls mit Hilfe eines Hilfsstrahls aus sichtbarem Licht beobachten.

Typischerweise wird die Haltevorrichtung gemäss der Erfindung im Zusammenhang mit einem Laser-Scanningverfahren betrieben. Dies heisst, dass eine einzelne Laserquelle verwendet wird und dass der Strahl der Laserquelle mittels einer optischen Anordnung aus Spiegeln mit einer vorbestimmten Geschwindigkeit entlang der Schweissnaht bewegt wird. Damit die Bewegung des Laserstrahls eingestellt und überprüft werden kann, wird dem Laserstrahl ein zweiter Strahl aus sichtbarem Licht, beispielsweise aus einem HeNe Laser oder einer Laser Diode überlagert.

Es hat sich gezeigt, dass die Haltevorrichtung gemäss der vorliegenden Erfindung in Kombination mit dem beschriebenen Laserscanning-Verfahren mit einer Laser-Diode besonders vorteilhaft und wichtig ist. Wenn mit Lasern mit verhältnismässig hoher Energiedichte wie Feststoff-Lasern geschweisst wird, ergibt sich eine relativ rasche Erwärmung und dadurch Plastifizierung der Schweissstelle. Dadurch kann mit Festkörperlasern mit sehr grossen Geschwindigkeiten gearbeitet werden. Dabei wird die ganze Schweissfläche plastifiziert, so dass sich allfällige Toleranzen an den Werkstücken durch plastische Verformung von selbst ausgleichen. Systeme mit Festkörper-Lasern sind aber im Hinblick auf Kosten nachteilig. Deshalb wird gemäss der vorliegenden Erfindung vorgezogen, mit Laserscanning-Systemen mit Diodenlasern zu arbeiten. Dabei erfolgt eine Erwärmung/Plastifizierung des Materials im Bereich der Schweissstelle immer nur quasi simultan. Deshalb ist es besonders wichtig, dass über die ganze Schweissnaht ein gleichmässiger Anpressdruck zwischen den Werkstücken erzeugt wird.

Gemäss einem weiteren bevorzugten Ausführungsbeispiel ist das Anpresselement mit abreissbaren Folien versehen. Auf Grund des dauernden Kontaktes zwischen dem Werkstück und der Andruckfläche des Anpresselementes besteht die Gefahr, dass die Andruckfläche mechanisch, durch Hitzeeinwirkung oder durch Ablagerung von Material beeinträchtigt wird. Derartige Abreissfolien können entfernt werden, sobald die Andruckfläche so beeinträchtigt wird, dass sie das Laserlicht für die Schweissung nicht mehr in ausreichendem Mass durchlässt. Es können eine oder auch eine Mehrzahl von übereinanderliegenden Abreissfolien eingesetzt werden.

Gemäss einem weiteren bevorzugten Ausführungsbeispiel ist die Vorrichtung zum Verschweissen der Werkstücke derart ausgebildet, dass das Gegenlager und die Haltevorrichtung gegenseitig quer zur Anpressrichtung beweglich sind. Typischerweise kann die Haltevorrichtung bei vertikaler Anpressrichtung an einem horizontal verschiebbaren Schlitten befestigt sein. Diese Anordnung ermöglicht eine Reduktion der Bauhöhe der Vorrichtung gemäss der Erfindung. Da zum Laden der ersten und zweiten Werkstücke auf das Gegenlager durch eine geeignete Auseinanderbewegung von Haltevorrichtung und Gegenlager ausreichend Platz geschaffen werden kann, kann die Haltevorrichtung in geringer Distanz zum Gegenlager angeordnet sein.

Das erfindungsgemässe Verfahren dient zum Bereitstellen einer Haltevorrichtung zum Andrücken eines mit Laserlicht mit einem zweiten Werkstück zu verschweissenden ersten Werkstücks an dieses zweite Werkstück. In einem ersten Schritt wird ein Anpresselement bereitgestellt. Das Anpresselement ist wenigstens teilweise im Wesentlichen transparent für das Laserlicht. In einem weiteren Verfahrensschritt wird die Form einer Andruckfläche des Anpresselementes an die Oberflächenform des ersten Werkzeuges angepasst. Der Schritt der Anpassung der Andruckfläche kann während dem Herstellvorgang der Haltevorrichtung erfolgen. Es ist aber auch denkbar, diesen Schritt erst bei der Verwendung der Haltevorrichtung durchzuführen, das heisst die Andruckfläche beim Kontakt mit dem ersten Werkstück, zu verformen.

Wie vorstehend beschrieben, kann das Anpresselement als Anpressblock ausgebildet sein. Dabei ist es einerseits denkbar, die Andruckfläche in den Anpressblock einzufräsen oder andererseits den Anpressblock in eine Form zu giessen, die zumindest teilweise formgleich wie das erste Werkstück ausgebildet ist. Besonders einfach lässt sich die Gussform als Abdruck der Oberflächenform eines Negativs des ersten Werkstücks herstellen.

Es ist aber auch denkbar, das Anpresselement als Folie auszubilden, die durch Umformen in die gewünschte Form gebracht wird. Vorteilhaft dient als Umformwerkzeug das erste Werkstück.

Die Erfindung wird im Folgenden in Ausführungsbeispielen und an Hand der Zeichnungen näher erläutert. Es zeigen:
- Figur 1a:: eine Schematische Darstellung einer erfindungsgemässen Vorrichtung im Querschnitt,
- Figur 1b:: eine Draufsicht auf dem Anpressblock gemäss Figur 1a,
- Figuren 2-4:: Verschiedene Ausführungsbeispiele eines Anpresselements der erfindungsgemässen Vorrichtung,
- Figur 5:: ein alternatives Ausführungsbeispiel einer erfindungsgemässen Vorrichtung mit einem fluiddichten Innenraum,
- Figur 6:: eine schematische Darstellung des Herstellvorgangs eines Andrückelementes gemäss Figur 4,
- Figur 7:: eine schematische Darstellung des Herstellvorgangs eines Anpresselementes gemäss Figur 2,
- Figur 8:: eine schematische Darstellung der Befestigung einer erfindungsgemässen Haltevorrichtung,
- Figur 9:: eine schematische Darstellung einer ersten Ausführungsform eines beweglich gelagerten Gegenlagers,
- Figur 10:: eine schematische Darstellung eines in Druckzonen aufgeteilten Gegenlagers und
- Figur 11:: eine schematische Darstellung der erfindungsgemässen Schweissvorrichtung

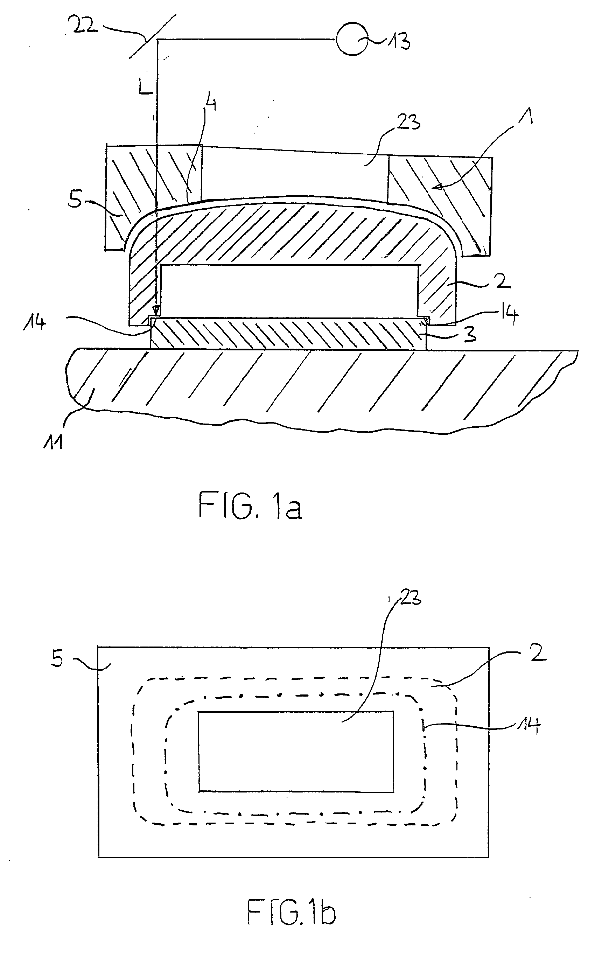

Figur 1a zeigt schematisch eine erfindungsgemässe Haltevorrichtung 1. Die Haltevorrichtung 1 dient zum Anpressen eines ersten Werkstücks 2 gegen ein zweites Werkstück 3. Das erste Werkstück 2 und das zweite Werkstück 3 werden durch die Haltevorrichtung 1 auf ein Gegenlager 11 gedrückt, so dass ihre gegenseitige Lage fixiert ist. Von einer Laserquelle 13 erzeugtes Laserlicht L dient dazu, das erste Werkstück 2 und das zweite Werkstück 3 in einer oder mehreren Schweissstellen 14 miteinander zu verschweissen. Die Haltevorrichtung 1 weist ein Anpresselement auf, welches schematisch in Figur 1a als Anpressblock 5 dargestellt ist. Der Anpressblock 5 weist eine Andruckfläche 4 auf. Die Form der Andruckfläche 4 entspricht der Oberflächenform des Werkstücks 2.

Damit das Laserlicht L zu der Schweissstelle 14 gelangen kann, ist das erste Werkstück 2 aus einem für das Laserlicht L transparenten Material ausgebildet. Ebenso ist der Anpressblock 5 aus einem transparentem Material ausgebildet. Der Anpressblock 5 ist im Ausführungsbeispiel gemäss Figur 1a ringähnlich ausgebildet. Eine Anpresskraft muss nur im Bereich der Schweisstellen 14 erzeugt werden. Im mittleren Bereich des Anpressblocks 5 muss keine Anpresskraft erzeugt werden. Dieser Bereich kann deshalb offenbleiben.

Figur 1b zeigt eine Draufsicht auf ein Ausführungsbeispiel eines Anpressblockes mit darunterliegendem ersten Werkstück 2. Der Anpressblock 5 weist in der Mitte eine Öffnung 23 auf. Im Bereich der Öffnung 23 ist eine Anpressung des ersten Werkstücks 2 an das zweite Werkstück 3 nicht nötig, da in dem Bereich keine Schweissnaht erzeugt werden soll. Der Anpressblock 5 drückt auf das erste Werkstück 2. Die Kontur des ersten Werkstücks 2 ist in Figur 1b durch eine gestrichelte Linie dargestellt. Mit der Vorrichtung gemäss der Erfindung soll eine in sich geschlossene Schweisslinie 14 erzeugt werden, welche in Figur 1b durch eine Strich-Punktlinie dargestellt ist.

Um den Laserstrahl entlang der Schweisslinie 14 zu bewegen ist (siehe Figur 1a) ein optisches System 22 vorgesehen. Solche herkömmlichen Scanningsysteme erlauben die Bewegung des mit der Laserquelle 13 erzeugten Lichtes entlang der Linie 14. Dazu wird beispielsweise ein Spiegel des optischen Systems 22 entsprechend bewegt. Typischerweise lassen sich so Geschwindigkeiten von 500mm/sec erzielen.

Als Laserquelle 13 wird beispielsweise ein Dioden-Laser mit einer Leistung von 200 W verwendet, der Licht L mit einer Wellenlänge von 800 - 1000 Nanometer aussendet. Das erste Werkstück 2 besteht beispielsweise aus Polystirol (PS), Polycarbonat (PC), Styrolacrylnitril (SAN), Polymethylmetacrylat (PMMA), Acrylnitril-Butadien-Styrol (ABS), Polyethylenterephthalat (PET), Polysulfon (PSU) oder aus Mischungen dieser Kunststoff. Das zweite Werkstück 3 weist eine hohe Absorption für das Laserlicht L auf, so dass sich im Bereich der Schweissstelle 14 auf Grund des absorbierten Lichtes L eine Erwärmung ergibt.

Das erste Werkstück 2 ist typischerweise ein Glas für Autoscheinwerfer oder Autolichter. Das zweite Werkstück 3 ist entsprechend typischerweise eine Halterung für ein solches Abdeckglas.

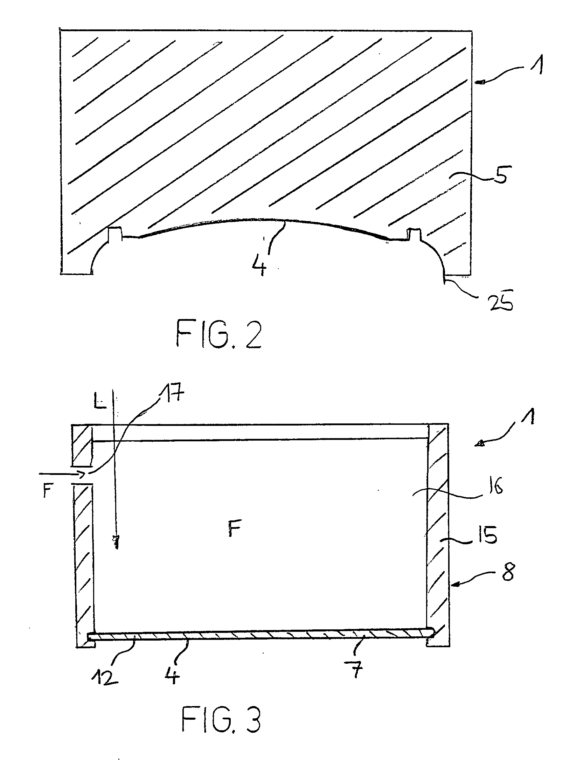

Figuren 2 bis 4 zeigen unterschiedliche Ausführungsformen von Anpresselementen.

Das Anpresselement gemäss Figur 2 ist als Anpressblock 5 ausgebildet. Die Andruckfläche 4 ist in den Anpressblock 5 eingefräst. Der Anpressblock 5 besteht beispielsweise aus Acrylglas (PMMA) (Hersteller: z.B. Röhm), welches für das Laserlicht L eine ausreichende Transparenz aufweist.

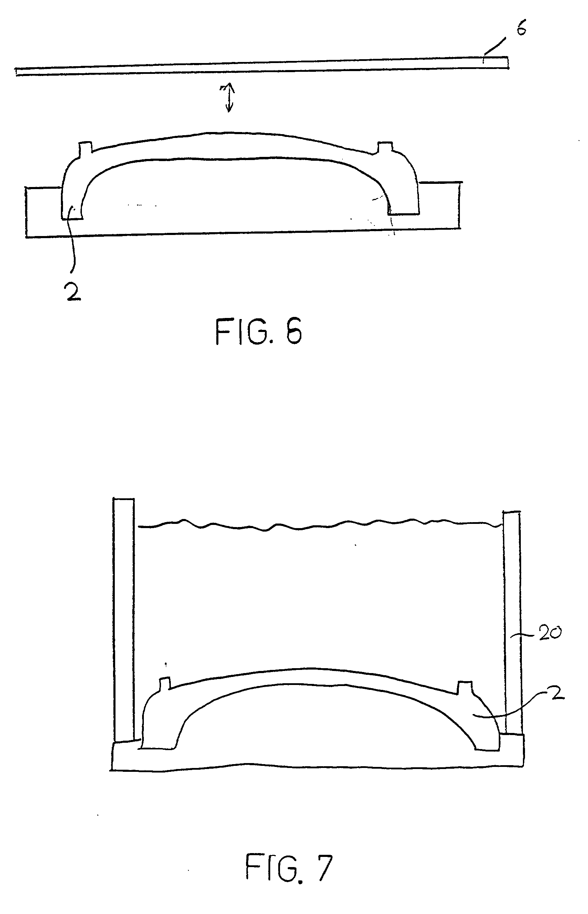

Alternativ ist es aber auch denkbar, den in Figur 2 gezeigten Anpressblock 5 als Gussteil herzustellen. Dazu eignet sich beispielsweise ein Polyurethan-Vakuum Giessharz des Typs PX 521 HAT von Axson. Die Gussform (siehe Figur 7) weist eine Innenfläche auf, die der Oberfläche des anzupressenden ersten Werkstücks entspricht.

Optional kann die Andruckfläche 4 mit einer oder mehreren Abreissfolie 25 versehen sein. Wenn die Andruckfläche z.B. durch Kontakt mit dem Werkstück 2 beeinträchtigt ist, kann sie durch Abreissen einer Folie 25 erneuert werden.

Figur 3 zeigt ein Anpresselement 8, das aus einer Halterung 15 besteht, in welche eine flexible Folie 7 eingespannt ist. Die Andruckfläche 4 der flexiblen Folie 7 ist zuerst im Wesentlichen eben. Das Anpresselement 8 weist einen Innenraum 16 auf, der mit einem Fluid F gefüllt ist. Beispielsweise kann das Fluid Luft sein, welche unter einem Druck von bis zu 1 Bar in den Innenraum 16 eingefüllt ist. Dabei muss darauf geachtet werden, dass der Druck im Innenraum 16 nicht zu gross wird, so dass sich die Folie 7 nicht nach aussen wölbt. Dies kann entweder dadurch erzielt werden, dass der Druck auf maximal 1 Bar begrenzt wird. Alternativ ist es auch denkbar, den Druck erst zu erhöhen, wenn die Andruckfläche 4 am Werkstück 2 angepresst wird. Die flexible Folie 7 bildet eine Wand 12 des Innenraums 16. Auf Grund des erhöhten Drucks des Fluids F im Innenraum lässt sich die Folie 7 gegen das erste Werkstück 2 andrücken, wobei sich die Andruckfläche 4 auf Grund der Flexibilität der Folie 7 automatisch der Form der Oberfläche des ersten Werkstücks 2 anpasst. In diesem Zusammenhang ist es ausserdem denkbar, den Innenraum 16 mit einem Anschluss 17 zu versehen, durch welchen das Fluid F in den Innenraum 16 gedrückt werden kann. Die flexible Folie 7 des Ausführungsbeispiels aus Figur 3 ist beispielsweise aus PVC gefertigt und weist eine Dicke von 2 mm auf.

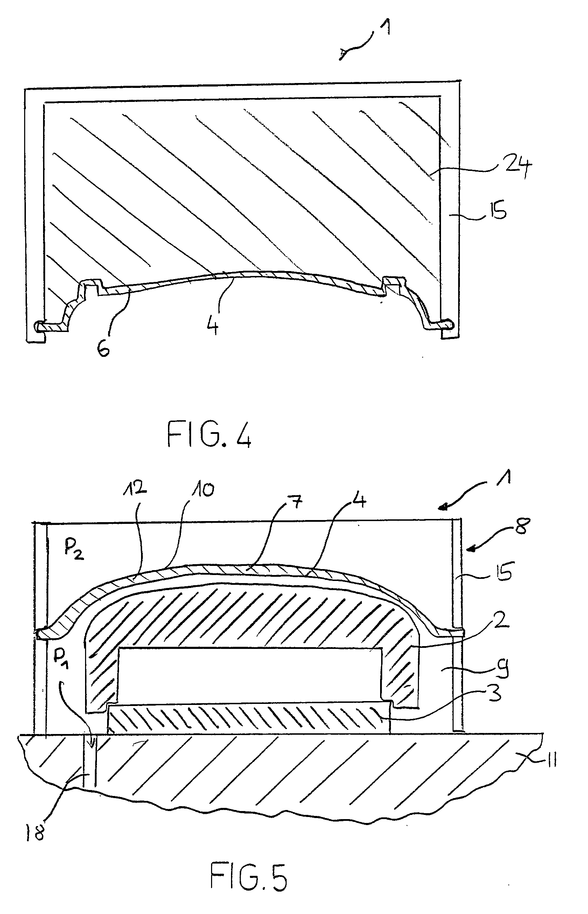

Gemäss dem Ausführungsbeispiel aus Figur 4 besteht das Anpresselement ebenfalls aus einem Halteteil 15, in das eine Folie 6 eingespannt ist. Die Folie 6 ist dauerhaft verformt, so dass die durch die Folie gebildete Andruckfläche 4 der Oberflächenform des ersten Werkstücks entspricht. Die Folie 6 ist beispielsweise eine dünnes Acrylglas (Hersteller: Röhm) mit einer Dicke von 2mm welche durch einen Umformvorgang in die gewünschte Form gebracht wurde. Der Innenraum 24 wird anschliessend zur Verstärkung der Folie mit einem transparenten Material ausgegossen.

Sowohl die Folie 7 als auch die Folie 6 weisen eine ausreichende Transparenz für das Laserlicht L auf. Das Halteteil 15 ist ebenfalls zumindest teilweise aus einem transparenten Material gefertigt, beispielsweise aus PMMA. Wesentlich ist in diesem Zusammenhang, dass der Bereich, durch welchen das Laserlicht L durchtreten soll, aus transparentem Material gefertigt ist. Es ist denkbar, dass der Rand des Halteteils 15 aus für das Laserlicht nicht transparentem Material gefertigt ist.

Figur 5 zeigt ein alternatives Ausführungsbeispiel zu Figur 3. Gemäss Figur 5 ist ebenfalls eine flexible Folie 7 vorgesehen. Gemäss dem Ausführungsbeispiel in Figur 5 wird aber die dem ersten Werkstück 2 abgewandte Seite 10 der flexiblen Folie 7 mit Umgebungsdruck P2 beaufschlagt. Das Halteteil 15, in welchem die flexible Folie 7 eingespannt ist, dichtet luftdicht gegen das Gegenlager 11 ab, so dass ein evakuierbarer Innenraum 9 entsteht. Durch einen Anschluss 18 ist der Innenraum 9 evakuierbar, so dass sich ein im Vergleich zum Umgebungsdruck niedriger Druck P1 im Innenraum 9 einstellen lässt. Auf Grund der Druckdifferenz zwischen dem Innenraum 9 und der Umgebung saugt sich die flexible Folie 7 am ersten Werkstück an, wobei die Andruckfläche 4 der flexiblen Folie 7 automatisch die Form der Oberfläche des ersten Werkstücks 2 annimmt.

Figur 6 zeigt schematisch, wie die Folie 6 des Ausführungsbeispiels gemäss Figur 4 verformt werden kann. Das erste Werkstück 2 oder ein Abbild davon dient als Umformwerkzeug für die Folie 6. Die Folie 6 wird auf eine Temperatur erwärmt, bei welcher sie plastisch verformbar ist und anschliessend gegen das als Werkzeug eingesetzte erste Werkstück 2 gepresst ist.

Figur 7 zeigt schematisch, wie sich ein Anpressblock 5 gemäss dem Ausführungsbeispiel in Figur 2 herstellen lässt. Eine Form 20 wird mit einem Giessharz ausgegossen. Teil der Form ist ein das erste Werkstück 2 enthaltendes Element oder ein Abbild des ersten Werkstücks. Bei den Herstellverfahren gemäss Figur 6 und Figur 7 ist sichergestellt, dass die Form der Andruckfläche 4 genau der Form des anzupressenden Werkstücks 2 entspricht, da das Werkstück 2 als formgebendes Werkzeug verwendet wurde.

Die erforderliche Anpresskraft gemäss allen Ausführungsbeispielen kann auf den Fachmann bekannte Weise erzeugt werden. Die verschiedenen gezeigten Anpresselemente können beispielsweise mit einem pneumatischen oder Hydraulikantrieb oder mit einem elektrischen Antrieb versehen sein. Die Art der Befestigung der Anpresselemente an einem solchen Antrieb und die Auslegung von solchen Antrieben sind dem Fachmann geläufig und werden hier nicht im Detail dargestellt. Im Fall des Ausführungsbeispiels gemäss Figur 3 und Figur 5 ist es auch denkbar, dass die Anpresskraft auf Grund eines Überdrucks im Innenraum 16 bzw. auf Grund eines Unterdrucks im Innenraum 9 erzeugt wird, so dass keine hydraulische oder elektrische Krafterzeugung mehr notwendig ist.

An Stelle von Luft kann das Fluid F auch als viscose Flüssigkeit ausgebildet sein, welche für das Laserlicht L transparent ist. Beispielsweise könnte Wasser oder für das Laserlicht ausreichend transparente Gele eingesetzt werden

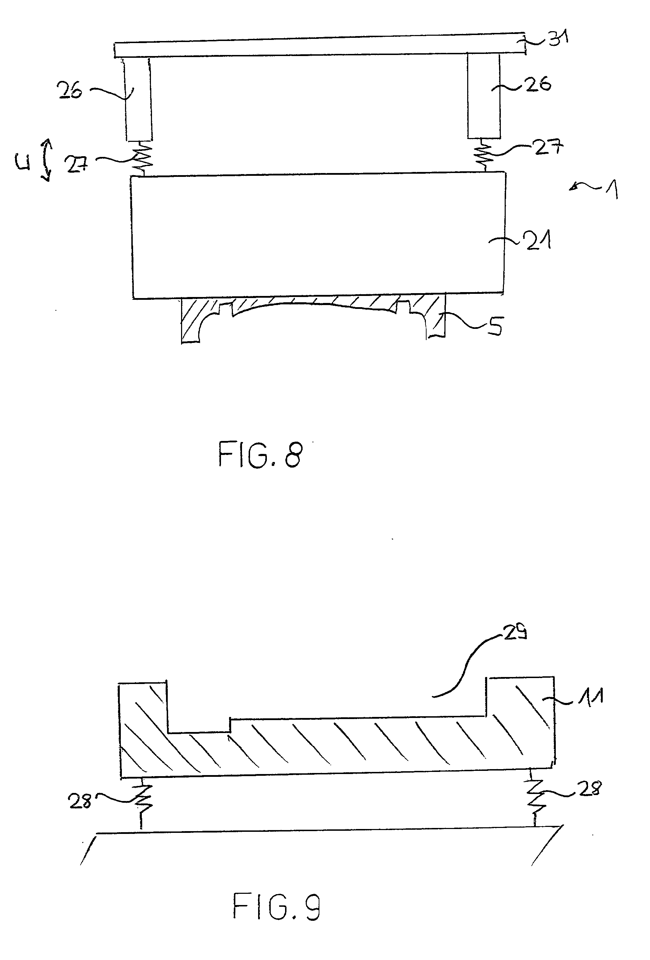

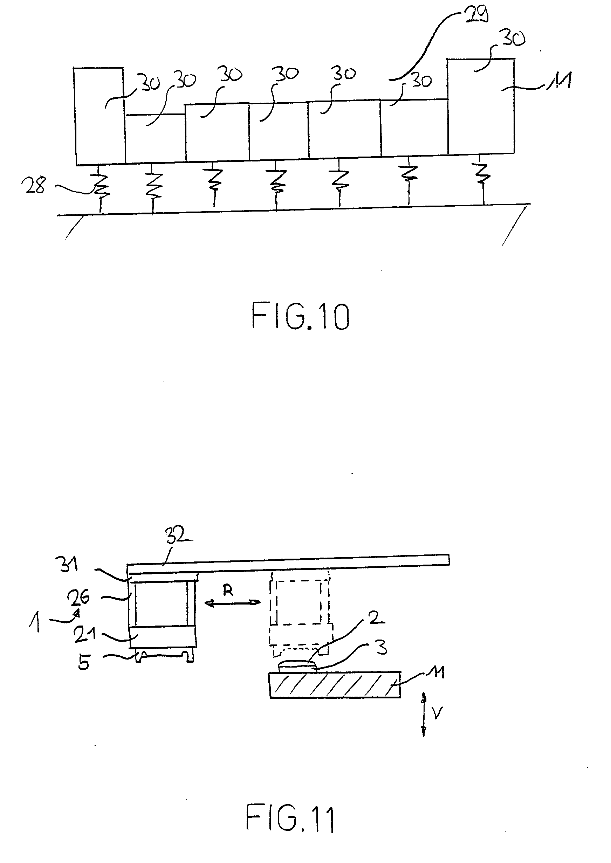

Figur 8 zeigt eine Ausführungsform einer Befestigung des Halteblocks 5 gemäss der Erfindung. Die Haltevorrichtung 1 besteht aus dem Halteblock 5, welcher an einem Haltekopf. 21 befestigt ist. Der Haltekopf 21 ist an einem verschiebbaren Schlitten 31 (siehe auch Figur 11) befestigt. Zum Verbinden des Haltekopfs 21 mit dem Schlitten 31 dienen Säulen 26, welche fest mit dem Schlitten 31 und über Federn 27 mit dem Haltekopf 21 verbunden sind. Die federnde Befestigung erlaubt eine Schwenkbewegung des Haltekopfs in Richtung U zum Ausgleich von Toleranzen am Werkstück. In der Seitenansicht gemäss Figur 8 sind zwei Säulen 26 dargestellt. Bei einem in der Draufsicht rechteckigen Halteblock 21 werden typischerweise vier in den Ecken des Halteblocks 21 angeordnete Säulen 26 vorgesehen.

Der Halteblock 21 ist aus einem ebenfalls für das Laserlicht L und auch für das sichtbare Licht transparenten Material gefertigt. Auf Grund des Zwischenraums zwischen den Säulen 26 und der Transparenz des Haltekopfs 21 ist die Sicht auf die Werkstücke 2, 3 auch nicht behindert, wenn das Werkstück durch die Haltevorrichtung 1 nach unten gedrückt wird. Dies erlaubt dem Benutzer der Vorrichtung, den Verlauf eines sichtbaren Hilfsstrahls entlang der geplanten Schweisslinie zu prüfen und gegebenenfalls Korrekturen vorzusehen. Die Federn 27 dienen dazu, allfällige Ungenauigkeiten der Werkstücke auszugleichen. Der Haltekopf 21 und damit der Anpressblock 5 passen sich dadurch automatisch der gewünschten Form an.

Figur 9 zeigt ein Ausführungsbeispiel der Lagerung des Gegenlagers 11. Das Gegenlager 11 wird oft auch als Amboss bezeichnet. Das Gegenlager 11 ist mit einer Aussparung 29 zur Aufnahme des zweiten Werkstücks 3 (in Figur 9 nicht dargestellt) versehen. Die Form der Aussparung 29 entspricht der Form der Unterseite des Werkstücks 3. Das Gegenlager 11 ist auf Federn 28 gelagert. Dank der federnden Lagerung kann sich das Gegenlager 11 ebenfalls der Form der Werkstücke anpassen, falls diese Toleranzen aufweisen. Auf Grund der federnden Lagerung des Anpresskopfes gemäss Figur 8 und/oder des Gegenlagers gemäss Figur 9 wird immer eine gleichmässige Anpresskraft entlang der ganzen Schweisslinie erzeugt. Dies gilt selbst dann, wenn die zu verschweissende Fläche in einer Ebene liegt, die nicht genau senkrecht zu der Anpressrichtung liegt. Durch Kontakt zwischen dem Anpressblock 5 und den Werkstücken wird der Anpressblock 5 und/oder das Gegenlager 11 automatisch in die richtige Richtung gebracht.

An Stelle von Federn 28 ist es auch denkbar, das Gegenlager mittels Stellschrauben zu befestigen. Mit den Stellschrauben lässt sich die Lage des Gegenlagers 11 ebenfalls verändern.

Figur 10 zeigt ein weiteres alternatives Ausführungsbeispiel eines Gegenlagers 11. Das Gegenlager 11 ist wie in Figur 9 mit einer Aussparung 29 zur Aufnahme des zweiten Werkstücks 3 versehen. Zusätzlich ist das Gegenlager 11 in einzelne Segmente 30 aufgeteilt. Die Segmente 30 sind je mit einer Feder 28 federnd gelagert. Dadurch lassen sich einzelne Druckzonen erzeugen. Auf diese Weise kann sichergestellt werden, dass in einzelnen Abschnitten des Werkstücks überall der gleiche, gewünschte Druck erzielt wird. Alternativ ist es auch denkbar, statt Federn 28 Pneumatik-Zylinder vorzusehen, welche pro Segment 30 eine individuelle Einstellung des Druckes auf die zu verschweissenden Abschnitte der beiden Werkstücke 2, 3 erlauben. Die einzelnen Segmente in Figur 10 erlauben gegebenenfalls eine gewisse Verformung des zweiten Werkstücks 3, um Spalte zu überbrücken, die im Bereich der gewünschten Schweissnaht auf Grund von Toleranzen an der Form der Werkstücke 2, 3 bestehen könnten.

Figur 11 zeigt schematisch eine erfindungsgemässe Vorrichtung, bei welcher die Haltevorrichtung 1 ähnlich wie in Figur 8 dargestellt aufgebaut ist. Die Haltevorrichtung 1 ist an einem Schlitten 31 befestigt, der entlang einer Schiene 32 in Richtung R verschiebbar ist. In Figur 11 ist der Schlitten 31 mit der Haltevorrichtung 1 in einer Ladeposition gezeigt. Dies heisst, dass oberhalb des Gegenlagers 11 ein freier Raum zur Verfügung steht, in welchem das erste und das zweite Werkstück 2, 3 auf dem Gegenlager 11 positioniert werden können. Zum Verschweissen des ersten Werkstücks 2 mit dem zweiten Werkstück 3 wird zuerst die Haltevorrichtung 1 in Richtung R in die gestrichelt dargestellte Position gefahren. Anschliessend wird das Gegenlager 11 in einer Anpressrichtung V, typischerweise in vertikaler Richtung V nach oben bewegt, so dass das erste Werkstück 2 und das zweite Werkstück 3 durch Kontakt mit dem Anpressblock 5 gegeneinander gedrückt werden. Sobald die Werkstücke 2, 3 gegeneinander gedrückt sind, wird der Schweissvorgang gestartet.

Die in Figuren 8 bis 10 gezeigten Vorrichtungen zum Befestigen des Anpressblocks 5 und des Gegenlagers 11 lassen sich selbstverständlich auch für andere erfindungsgemässe Haltevorrichtungen, insbesondere für die in Figur 3, 4 und 5 gezeigten Ausführungsformen einsetzen.

Das Gegenlager 11 fährt so weit hoch, dass der Abstand der Ebene der Schweissnaht zwischen dem ersten Werkstück 2 und dem zweiten Werkstück 3 von der Laserquelle so gewählt ist, dass die Schweissfläche im Brennpunkt des Laserstrahls L liegt.

## Patentansprüche

1. Haltevorrichtung (1) zum Andrücken wenigstens eines unter Einfluss von Licht, insbesondere Laserlicht (L) mit wenigstens einem zweiten Werkstück (3) zu verbindenden, insbesondere zu verschweissenden ersten Werkstücks (2) an das zweite Werkstück (3),
wobei das erste Werkstück (2) aus einem für das Licht im Wesentlichen transparenten Material besteht und eine nicht planare Oberflächenform aufweist,
**dadurch gekennzeichnet, dass** die Haltevorrichtung (1) ein Anpresselement (5, 6, 8) aufweist, das wenigstens teilweise aus für das Licht (L) im wesentlichen transparenten Material besteht und
dass das Anpresselement (5, 6, 8) eine Andruckfläche (4) aufweist, deren Form an die Oberflächenform des ersten Werkstücks (2) angepasst oder anpassbar ist.

2. Haltevorrichtung nach Anspruch 1 **dadurch gekennzeichnet, dass** das Anpresselement als einstückiger, aus transparentem Material bestehender Anpressblock (5) ausgebildet ist.

3. Haltevorrichtung nach Anspruch 2, **dadurch gekennzeichnet, dass** die Andruckfläche (4) in den Anpressblock (5) eingefräst ist und dass der Anpressblock (5) vorzugsweise aus Acrylglas besteht.

4. Haltevorrichtung nach Anspruch 2, **dadurch gekennzeichnet, dass** der Anpressblock (5) ein Gussteil ist und dass der Anpressblock (5) vorteilhaft aus einem Polyurethan-Giessharz besteht.

5. Haltevorrichtung nach Anspruch 1, **dadurch gekennzeichnet, dass** das Anpresselement eine Folie (6) aufweist, deren Form, insbesondere durch Warmverformung, der Oberflächenform des ersten Werkstücks (2) angepasst ist.

6. Haltevorrichtung nach Anspruch 1, **dadurch gekennzeichnet, dass** die Andruckfläche (4) als flexible, aus einem für das Laserlicht (L) im Wesentlichen transparenten Material bestehende Folie (7) ausgebildet ist, welche an die Oberflächenform des ersten Werkstücks (2) anpassbar ist.

7. Haltevorrichtung nach Anspruch 6, **dadurch gekennzeichnet, dass** das Anpresselement (8) fluiddicht ist und mit einem für das Laserlicht (L) transparenten Fluid (F) gefüllt ist, wobei die Andruckfläche (4) eine Wand (12) bildet, welche einen mit dem Fluid (F) gefüllten Innenraum (16) des Anpresselementes (8) abschliesst.

8. Haltevorrichtung nach Anspruch 6, **dadurch gekennzeichnet, dass** die Vorrichtung (1) einen durch die Andruckfläche (4) luftdicht abschliessbaren Raum (9) aufweist, in welchen das erste und das zweite Werkstück (2, 3) einsetzbar sind und welcher evakuierbar ist,
und dass die dem ersten Werkstück (2) abgewandte Seite (10) der Andruckfläche (4) mit Umgebungsdruck (P2) beaufschlagbar ist, so dass die Andruckfläche durch Erzeugung eines Unterdrucks im Raum (9) an das erste Werkstück (2) ansaugbar ist.

9. Haltevorrichtung nach einem der Ansprüche 1 bis 8, **dadurch gekennzeichnet, dass** das Anpresselement (5, 6, 8) bezogen auf die Anpressrichtung (V) beweglich, insbesondere federnd befestigt ist.

10. Haltevorrichtung nach einem der Ansprüche 1 bis 9, **dadurch gekennzeichnet, dass** das Anpresselement (5, 6, 8) an einem Haltekopf (21) aus einem für sichtbares Licht und Laserlicht (L) transparenten Material besteht.

11. Haltevorrichtung nach Anspruch 10, **dadurch gekennzeichnet, dass** der Haltekopf (21) in einer Richtung (R) quer zur Anpressrichtung (V) verschiebbar gelagert ist.

12. Haltevorrichtung nach einem der Ansprüche 1 bis 11, **dadurch gekennzeichnet, dass** die Andruckfläche (4) mit wenigstens einer abreissbaren Folie (25) versehen ist.

13. Vorrichtung zum Verschweissen eines ersten Werkstücks (2) mit einem zweiten Werkstück (3) durch Laserlicht (L), wobei das erste Werkstück wenigstens teilweise aus einem für das Laserlicht im Wesentlichen transparenten Material besteht, mit einer Quelle (13) für das Laserlicht (L) und mit einem Gegenlager (11) für das zweite Werkstück (3),
**dadurch gekennzeichnet, dass** die Vorrichtung eine Haltevorrichtung (1) zum Andrücken des ersten Werkstücks (2) an das zweite Werkstück (3) und an das Gegenlager (11) nach einem der Ansprüche 1 bis 12 aufweist.

14. Vorrichtung nach Anspruch 13, **dadurch gekennzeichnet, dass** das Gegenlager beweglich, insbesondere federnd gelagert ist.

15. Vorrichtung nach einem der Ansprüche 13 oder 14, **dadurch gekennzeichnet, dass** das Gegenlager (11) in einzelne Segmente (30) aufgeteilt ist, welche Druckzonen bilden.

16. Vorrichtung nach einem der Ansprüche 13 bis 15, **dadurch gekennzeichnet, dass** die Haltevorrichtung (1) und das Gegenlager (11) in einer Richtung quer zur Anpressrichtung (V) gegenseitig bewegbar sind, das insbesondere die Haltevorrichtung (1) an einem Schlitten (31) verschiebbar gelagert ist.

17. Verfahren zum Bereitstellen einer Haltevorrichtung zum Andrücken eines mit unter Einwirkung von Licht (L) mit einem zweiten Werkstück (3) zu verschweissenden ersten Werkstücks (2) an das zweite Werkstück (3), insbesondere zum Bereitstellen einer Haltevorrichtung nach einem der Ansprüche 1 bis 12, enthaltend die Schritte
- Bereitstellen eines Anpresselementes (5, 6, 8), welches wenigstens teilweise im Wesentlichen für das Licht (L) transparent ist,
- Anpassen der Form der Andruckfläche (4) an die Oberflächenform des ersten Werkstückes (2).

18. Verfahren nach Anspruch 17, **dadurch gekennzeichnet, dass** das Anpresselement als Anpressblock (5) ausgebildet ist und dass die Andruckfläche (4) in den Anpressblock (5) eingefräst wird.

19. Verfahren nach Anspruch 17, **dadurch gekennzeichnet, dass** das Anpresselement als Anpressblock (5) ausgebildet ist und dass der Anpressblock (5) in einer Form (20) gegossen wird.

20. Verfahren nach Anspruch 19, **dadurch gekennzeichnet, dass** die Form (20) wenigstens teilweise als Abdruck der Oberflächenform des ersten Werkstücks (2) hergestellt ist.

21. Verfahren nach Anspruch 17, **dadurch gekennzeichnet, dass** das Anpresselement als Folie (6) ausgebildet ist und dass die Form der Andruckfläche (4) durch Verformen der Folie (6) an die Oberfläche des ersten Werkstücks angepasst wird.

22. Verfahren nach Anspruch 21, **dadurch gekennzeichnet, dass** das Werkzeug für die Formgebung der Folie (6) ein erstes Werkzeug (2) oder ein positives Abbild des ersten Werkzeug (2) ist.

23. Verfahren nach Anspruch 17, **dadurch gekennzeichnet, dass** die Andruckfläche (4) flexibel ist und dass die Form der Andruckfläche (4) beim Anpressvorgang des Anpresselements (8) der Form der Oberfläche des ersten Werkstücks (2) angepasst wird.
